# EUROPEAN PATENT SPECIFICATION

(11) **EP 3 477 409 B1**
(45) Date of publication and mention of the grant of the patent: **25.03.2020**
(21) Application number: 17382730.4
(22) Date of filing: 31.10.2017
(51) Int. Cl.: G05B 23/02, F24F 11/38

(54) **A COMPUTER IMPLEMENTED METHOD, A COMPUTER PROGRAM, AND AN APPARATUS FOR THE DIAGNOSIS OF ANOMALIES IN A REFRIGERATION SYSTEM**
COMPUTERIMPLEMENTIERTES VERFAHREN, COMPUTERPROGRAMM UND VORRICHTUNG ZUR DIAGNOSE VON ANOMALIEN IN EINEM KÄLTESYSTEM
PROCÉDÉ MIS EN OEUVRE PAR ORDINATEUR, PROGRAMME INFORMATIQUE ET APPAREIL DE DIAGNOSTIC D'ANOMALIES DANS UN SYSTÈME DE RÉFRIGÉRATION

(43) Date of publication of application: 01.05.2019
(73) Proprietor: Ako Electromecánica, S.A.L., 08812 Sant Pere de Ribes (ES); Universitat de Lleida, 25003 Lleida (ES)
(72) Inventor: ROVIRA RAVENTÓS, Ricardo, 08800 VILANOVA I LA GELTRÚ (ES); MORENO ARGILES, Pere, 08800 VILANOVA I LA GELTRÚ (ES); ALBETS CHICO, Xavier, 08800 VILANOVA I LA GELTRÚ (ES); GONZÁLEZ SÁNCHEZ, Miguel Angel, 08740 SANT ANDREU DE LA BARCA (ES); CABEZA FABRA, Luisa Fernanda, 25001 LLEIDA (ES); DE GRACIA, Alvaro, 25002 LLEIDA (ES); ZSEMBINSZKI, Gabriel, 25001 LLEIDA (ES); MALDONADO, Jose Miguel, 50004 ZARAGOZA (ES)
(74) Representative: Ponti & Partners, S.L.P

(56) References cited:
- US-A1- 2007 156 373
- Ms. Hetal Bhavsar ET AL: "Support Vector Machine Classification using Mahalanobis Distance Function", International Journal of Scientific and Engineering Research, 25 January 2015 (2015-01-25), pages 618-626, XP055471814, DOI: 10.14299/ijser.2015.01.015 Retrieved from the Internet: URL:https://pdfs.semanticscholar.org/b82b/ 5b7465fcb1a4990255ddc1fb2579836ff801.pdf

## Description

### FIELD OF THE INVENTION

The present invention generally relates, in a first aspect, to a computer implemented method for the diagnosis of anomalies in a refrigeration system, and more particularly to a method which provides an automatic diagnoses of different anomalies based on the detection of associated anomalous variations.

A second and a third aspect of the invention respectively relate to a computer program and an apparatus for the diagnosis of anomalies in a refrigeration system which implement the method of the first aspect of the invention.

### BACKGROUND OF THE INVENTION

Proper maintenance of refrigeration equipment is crucial to its operation and to avoid costly repairs. The detection of possible faults of the system is sometimes complex and often requires direct measurements, which greatly limit the detection capacity of the anomaly, since when the fault is detected, it represents a high cost of repair and/or has caused an inefficient operation of the system over a long period of time.

A clear example is the leak of refrigerant in the system, where the direct measurement (gas detection in the chamber) will give the alarm of the leak of refrigerant only when the concentration of said gas in the chamber is considerable. Therefore, on the one hand, the system will have been operating for many hours with an undesirable refrigerant level and, on the other hand, the refrigeration circuit will have lost much of the refrigerant by leaks, causing a high cost for the filling of refrigerant for starting-up the refrigeration system again. There are also some system anomalies that are difficult to detect by direct measurements, such as the presence of dirt in the evaporator and/or in the condenser. Indirect measurements are therefore desired to detect some of said anomalies.

There are some proposals which include the above mentioned indirect measurements, such as the one divulged in US7082380B2, which discloses a method comprising:
- a learning mode process comprising performing measurements of several operating parameters of the refrigeration system when operating under known working conditions with no anomalies; and
- an evaluation process comprising performing measurements of at least said operating parameters when the working conditions of the refrigeration system are unknown, and evaluating the obtained values.

The proposal made by US7082380B2 is not directed broadly to automatic diagnosis but only intended to provide a first-attempt diagnosis, i.e. a foundation from which an expert operator/technician can determine an accurate diagnosis. The intervention of said expert operator/technician is therefore needed to provide the diagnosis. Moreover, only one anomaly is determined according to US7082380B2.

Document US 2007/0156373 A1 shows a failure diagnosis apparatus for a refrigerating system.

Document XP 55471814 shows a SVM classification based on a variation of the Mahalanobis distance.

It is, therefore, necessary to provide an alternative to the state of the art which covers the gaps found therein, by providing a method which really provides an automatic and complete diagnosis of different anomalies occurring in a refrigeration system, based one indirect measurements.

### SUMMARY OF THE INVENTION

To that end, the present invention relates, in a first aspect, to a computer implemented method for the diagnosis of anomalies in a refrigeration system, wherein said refrigeration system comprises at least a refrigeration chamber, an evaporator, a compressor and a condenser, the method comprising:
- a learning mode process, or training phase, comprising performing measurements of several operating parameters of the refrigeration system when operating under known working conditions with no anomalies; and
- an evaluation process comprising performing measurements of at least said operating parameters when the working conditions of the refrigeration system are unknown, and evaluating the obtained values.

In contrast to the methods known in the prior art, in the one of the first aspect of the present invention:
- the learning mode process further comprises defining a plurality of different anomalies in the operation of the refrigeration system, each of said anomalies associated to corresponding one or more specific anomalous variations of one or more of said operating parameters; and
- the evaluation process comprises automatically diagnosing that one of said different anomalies has occurred when the specific one or more anomalous variations associated thereto have been detected.

In other words, the method of the first aspect of the invention automatically diagnoses "illnesses" (anomalies) based on the detection of associated "symptoms" (anomalous variations).

The measurements of operating parameters performed according to the method of the first aspect of the invention can be considered as indirect measurements, as they do not provide a direct measurement of the "illness" but of the "symptoms" thereof.

For an embodiment, the above mentioned learning mode process comprises performing said measurements of several operating parameters of the refrigeration system when operating under several and different contour working conditions, with no anomalies, to obtain corresponding groups of different healthy reference values, each group associated to a respective of said contour working conditions.

According to an implementation of said embodiment, the method of the first aspect of the present invention further comprises obtaining by calculation, at the learning mode process, corresponding groups of virtual reference values by applying specific deviations to at least some of the healthy reference values, each of said specific deviations corresponding to a respective of said anomalous variations.

For a variant of said implementation, the method comprises obtaining, by calculation, several sets of said groups of virtual reference values, each set for a respective of said different anomalies, by applying the specific deviations corresponding to the anomalous variations of the corresponding anomaly to at least some of the healthy reference values.

For an embodiment, the method of the first aspect of the present invention comprises comparing, at the evaluation process, the values obtained from the measurements of the operating parameters with the healthy reference values and with the virtual reference values, to diagnose if the refrigeration system is whether operating under conditions with no anomalies or working with some of said different anomalies, and in that latter case also to identify which of the different anomalies is occurring, depending on the result of said comparison.

For a preferred implementation of the above mentioned embodiment, the method of the first aspect of the invention comprises using a Support Vector Machine (SVM) algorithm to classify the healthy reference values and the virtual reference values associated to each anomaly into different classes, and to perform the above mentioned comparison of the evaluation process to determine to which of the classes the currently measured operating parameters values belong.

According to an embodiment, the above mentioned groups of healthy reference values include healthy indicator values and healthy control values, wherein the groups of virtual reference values also include first virtual reference values obtained by applying said specific deviations to the healthy indicator values, and, associated thereto, second virtual reference values constituted directly by the healthy control values, unmodified.

Preferably, the method of the first aspect of the invention comprises performing the comparison of the evaluation process for all the values of each group, including, regarding the groups of virtual reference values, the first and the second virtual reference values, and, regarding the groups of healthy reference values, the healthy indicator values and the healthy control values.

For an embodiment, the method of the first aspect of the invention comprises storing the groups of healthy and virtual reference values into respective data structures, such as data bases, and updating the data structures with the corresponding values of the operating parameters measured at the evaluation process.

For a preferred embodiment:
- the healthy indicator values correspond to the following operating parameters of the refrigeration system: evaporating pressure at the evaporator, condensing pressure at the condenser, and degree of subcooling, and
- the healthy control values correspond to the following operating parameters of the refrigeration system: temperature of the refrigeration chamber, temperature outside the refrigeration chamber, and degree of superheating.

However, for other embodiments, other operating parameters different to and alternatively or complementarily to the ones listed above, are used as healthy indicator values and/or healthy control values.

According to an embodiment, the method of the first aspect of the present invention comprises performing the above mentioned measurements of the operating parameters, both for the learning mode process and for the evaluation process, after a defrosting process, for groups of N measurements within a time interval just before the temperature of the refrigeration chamber arrives at a predetermined set point value, wherein said time interval lasts for a few seconds or a few minutes, and wherein each of said obtained values corresponds to an arithmetic average of the N measurements of a corresponding of said groups of N measurements.

Preferably, the method of the present invention comprises performing the above mentioned measurements when the condenser of the refrigeration system is not exposed to solar radiation.

Generally, the above mentioned measurements are performed after any defrosting process, and the above described comparison, via the SVM algorithm or by means of other kind of algorithms, is also performed with the obtained measurements and with respect to both the healthy reference values and the virtual reference values.

Different automatic actions are performed, for some embodiments, based on the result of said comparison. For example, if an anomaly is detected for M consecutive points, an alarm can be activated or even the refrigeration system can be automatically stopped, depending on the severity of the problem.

The method of the first aspect of the present invention is applicable to all types of refrigeration systems as defined above, i.e. including a refrigeration chamber, preferably for autonomous refrigeration systems, since the method determines if the refrigeration system is working correctly or with some anomaly comparing the measurement of the variables/parameters described above with, among others a healthy database generated from measures of the system in its operation real. That is, the method is not limited to a specific equipment whose correct operation has been tested by the manufacturer.

Thereafter, whenever there is a thawing process at night time, the measured stable point will be compared with the different databases (healthy and of each anomaly to be detected) using the SVM (Support Vector Machine). In case the point is classified as healthy, this point will become part of the database of healthy states. In case consecutive M points are classified as anomaly X, the system will give the alarm or stop the system, depending on the severity of the problem

With respect to those referred above as different anomalies, these include the following anomalies associated to the indicated below anomalous variation of operating parameters:
- Leaks of the refrigerant, associated to a decrease of the evaporating pressure, a decrease of the condensing pressure, and a decrease of the degree of subcooling;
- Dirtiness in the condenser, associated to an increase in both, the condensing pressure and the degree of subcooling;
- Dirtiness in the evaporator, associated to a decrease in the evaporating pressure;
- Dirtiness in the evaporator and in the condenser, associated to an increase in the condensing pressure, to a decrease in the evaporating pressure, and to an increase in the degree of subcooling;
- Leaks of the refrigerant and dirtiness in the condenser, associated to an increase in the condensing pressure, and to a decrease in the degree of subcooling;
- Leaks of the refrigerant and dirtiness in the evaporator, associated to a decrease in all of the evaporating pressure, condenser pressure and the degree of subcooling; and
- Leaks of the refrigerant and dirtiness in the evaporator and in the condenser, associated to a decrease in the evaporating pressure, an increase in the condenser pressure, and a decrease in the degree of subcooling.

The present invention also relates, in a second aspect, to a computer program, comprising program code instructions that when run in a computer or a processor implement the steps of the method of the first aspect of the invention.

Also, in a third aspect, the present invention relates to an apparatus for the diagnosis of anomalies in a refrigeration system of a refrigeration chamber, comprising:
- a plurality of sensors configured and arranged for measuring several operating parameters of the refrigeration system, and providing corresponding electrical signals representative of the measurements; and
- an electronic unit configured and arranged to receive said measurements, and comprising storage means for storing at least data representative of said measurements and data defining a plurality of different anomalies in the operation of the refrigeration system, and processing means for processing all of said data according to the method of the first aspect of the invention.

### BRIEF DESCRIPTION OF THE FIGURES

In the following some preferred embodiments of the invention will be described with reference to the enclosed figures. They are provided only for illustration purposes without however limiting the scope of the invention.
Figure 1 schematically illustrates the apparatus of the third aspect of the invention applied to a refrigeration system.
Figure 2 is a flow chart representative of an algorithm which implements the method of the first aspect of the invention.
Figure 3 is a plot showing the temperature evolution vs. time of a refrigeration chamber around a defrosting cycle, after which a measurement time interval is defined to perform reliable stable measurements according to the method of the first aspect of the invention.

### DESCRIPTION OF THE PREFERRED EMBODIMENTS

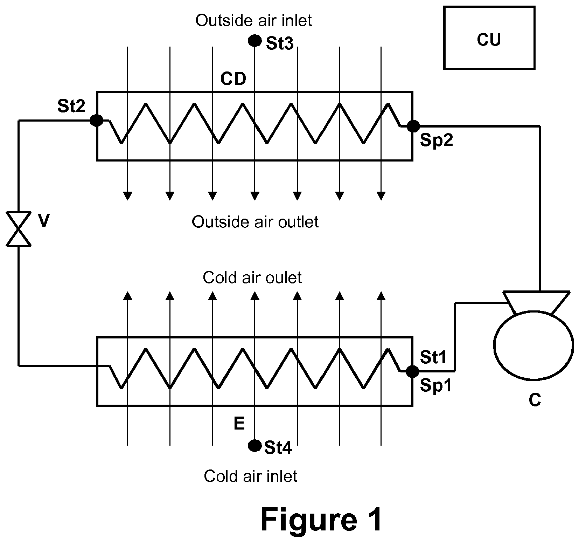

Figure 1 schematically illustrates the apparatus of the third aspect of the invention applied to a refrigeration system which comprises a refrigeration chamber (not shown), an evaporator E, a compressor C, a condenser CD, and an expansion valve V.

The apparatus includes temperature sensors St1-St4 and pressure sensors Sp1-Sp2 configured and arranged for measuring several operating parameters of the refrigeration system, and providing corresponding electrical signals representative of the measurements. Specifically, the following operating parameters are measured with these sensors, or obtained from measurements made therewith:
- Evaporation pressure (P₁) [Pa], with pressure sensor Sp1.
- Condensation pressure (P₂) [Pa], with pressure sensor Sp2.
- Chamber temperature (T_{cam}) [°C], with temperature sensor St4.
- Outdoor temperature (Tₑₓₜ) [°C], with temperature sensor St3.
- Degree of overheating (T_{SH}) [°C], obtained from the difference between temperature measured with St1 and evaporating temperature based on pressure measured with Sp1.
- Degree of subcooling (T_{SC}) [°C], obtained from the difference between temperature measured with St2 and condensation temperature based on pressure measured with Sp2.

The apparatus of the second aspect of the present invention also includes an electronic unit CU configured and arranged to receive said measurements, by corresponding wired and/or wireless connections (not shown) with the sensors, and comprising storage means for storing at least data representative of said measurements and data defining a plurality of different anomalies in the operation of the refrigeration system, and processing means for processing all of said data according to the method of the first aspect of the invention.

Hereinafter, a detailed description of some embodiments of the method of the first aspect of the invention are given, including both the training/learning phase and the evaluation phase.

### Principle of operation:

As stated in a previous section, the present invention proposes to automatically diagnose in a refrigerating system, generally in an autonomous refrigerating chamber thereof, different anomalies, such as those referring to refrigerant leaks, evaporator and/or condenser operation problems such as accumulated dirt or fan faults, as well as the combination of such anomalies in the evaporator and in the condenser. To do this, the apparatus/method of the present invention will measure and record various parameters when the refrigeration system is operating correctly, free of anomalies, and will save them in memory as "healthy" points or healthy reference values HR, including healthy indicator values HRi and healthy control values HRc.

In addition, the method of the first aspect of the invention generates virtually deviations from these healthy points to store them as "ill" points, which are necessary in the process of detection and identification of anomalies. Specifically, said "ill" points, or virtual reference values VR, include first virtual reference values VRi, obtained by applying the deviations to the healthy indicator values HRi, and second virtual reference values VRc which are coincident with the healthy control values HRc.

The detection sequence is detailed below, for some embodiments.

Step 1: After the installation of the refrigeration system/equipment, the system's healthy data is measured in order to know its operation under different operating conditions (different external temperatures, different setpoint temperatures, and different degrees of overheating) when there are no anomalies. This phase is called herein as a training phase, or learning mode process, during which the measured values for the following six variables, or operating parameters, are recorded (obtained as described above with reference to Figure 1):
- Evaporation pressure (P₁) [Pa]
- Condensation pressure (P₂) [Pa]
- Chamber temperature (T_{cam}) [° C]
- Outdoor temperature (Tₑₓₜ) [°C]
- Degree of overheating (T_{SH}) [°C]
- Subcooling Degree (T_{SC}) [°C]

As an example, the values obtained from measurements of four stable "healthy" points/states performed during the training phase is shown in Table 1 below.

**Table 1. Example of measurement of healthy states during the training phase**

| T_{SH} (°C) | T_{SC} (°C) | Tₑₓₜ (°C) | T_{cam} (°C) | P₁ (bar) | P₂ (bar) |
|---|---|---|---|---|---|
| 9.08 | 5.61 | 24.26 | -18.47 | 0.97 | 14.31 |
| 9.41 | 5.46 | 24.98 | -18.48 | 0.95 | 14.55 |
| 9.80 | 5.40 | 25.05 | -18.44 | 0.94 | 14.47 |
| 8.73 | 5.48 | 24.89 | -18.58 | 0.96 | 14.54 |

Each row of values of the above Table 1 is what in a previous section has been called a group of healthy reference values HR, each group associated to a respective of several and different contour working conditions, and forming a corresponding healthy state.

Values for parameters T_{SC}, P₁, and P₂ are considered as healthy indicator values HRi, while values for parameters T_{cam}, Tₑₓₜ and T_{SH} are considered as healthy control values HRc.

Step 2: For each healthy point/state measured during the training phase, an ill state is virtually generated for each anomaly. For this, from previous empirical tests, it is known how such data should be deviated for each of the anomalies that may occur in the system. For example, the following specific deviations (which may vary for different refrigeration systems) are applied for different anomalies (or "illnesses"), according to some embodiments, to obtain some of the virtual values of Table 2 to 5 below, each for a different anomaly.

Each row of values of Tables 2 to 5 corresponds to what in a previous section has been called a group of virtual reference values VR, while each of Tables 2 to 5 corresponds to what in a previous section has been called a set of groups of virtual reference values VR. Specifically, four different anomalies are defined below, based on corresponding deviations of one or more of operating parameters T_{SC}, P₁, and P₂.
Anomaly 1 - Leak of refrigerant:
Decrease T_{SC} by 7.3%.
Decrease P₁ by 1%.
Decrease P₂ by 1.1%.

**Table 2. Example of virtual generation of points with Anomaly 1**

| T_{SH} (°C) | T_{SC} (°C) | Tₑₓₜ (°C) | T_{cam} (°C) | P₁ (bar) | P₂ (bar) |
|---|---|---|---|---|---|
| 9.08 | 5.20 | 24.26 | -18.47 | 0.96 | 14.15 |
| 9.41 | 5.06 | 24.98 | -18.48 | 0.94 | 14.39 |
| 9.80 | 5.01 | 25.05 | -18.44 | 0.93 | 14.31 |
| 8.73 | 5.08 | 24.89 | -18.58 | 0.95 | 14.38 |

Anomaly 2 - Dirtiness in the condenser:
Increase T_{SC} by 3.5%.
Increase P₂ by 2.6%.

**Table 3. Example of virtual generation of points with Anomaly 2**

| T_{SH} (°C) | T_{SC} (°C) | T₁₁ (°C) | T₁₄ (°C) | P₁ (bar) | P₂ (bar) |
|---|---|---|---|---|---|
| 9.08 | 5.81 | 24.26 | -18.47 | 0.97 | 14.68 |
| 9.41 | 5.65 | 24.98 | -18.48 | 0.95 | 14.93 |
| 9.80 | 5.59 | 25.05 | -18.44 | 0.94 | 14.84 |
| 8.73 | 5.67 | 24.89 | -18.58 | 0.96 | 14.92 |

Anomaly 3 - Dirtiness in the evaporator:
Decrease P₁ by 2.7%.

**Table 4. Example of virtual generation of points with Anomaly 3**

| T_{SH} (°C) | T_{SC} (°C) | T₁₁ (°C) | T₁₄ (°C) | P₁ (bar) | P₂ (bar) |
|---|---|---|---|---|---|
| 9.08 | 5.61 | 24.26 | -18.47 | 0.94 | 14.31 |
| 9.41 | 5.46 | 24.98 | -18.48 | 0.92 | 14.55 |
| 9.80 | 5.40 | 25.05 | -18.44 | 0.91 | 14.47 |
| 8.73 | 5.48 | 24.89 | -18.58 | 0.93 | 14.54 |

Anomaly 4 - Dirtiness in the condenser and in the evaporator:
Increase P₂ by 2.2%.
Decrease P₁ by 2.2%.
Increase T_{sc} by 3.4%.

**Table 5. Example of virtual generation of points with Anomaly 4**

| T_{SH} (°C) | T_{SC} (°C) | T₁₁ (°C) | T₁₄ (°C) | P₁ (bar) | P₂ (bar) |
|---|---|---|---|---|---|
| 9.08 | 5.80 | 24.26 | -18.47 | 0.95 | 14.62 |
| 9.41 | 5.65 | 24.98 | -18.48 | 0.93 | 14.87 |
| 9.80 | 5.58 | 25.05 | -18.44 | 0.92 | 14.79 |
| 8.73 | 5.67 | 24.89 | -18.58 | 0.94 | 14.86 |

As shown in Tables 2 to 5 above, some of the virtual reference values VR included therein are identical to the corresponding ones of Table 1, particularly second virtual reference values VRc are identical to healthy control values HRc, i.e. those of control operating parameters T_{SH}, Tₑₓₜ and T_{cam}, while the rest of values, i.e. first virtual reference values VRi are those obtained by applying the above indicated deviations to the healthy indicator values HRi for some or all of the same operating parameters of Table 1, i.e. T_{SC}, P₁, and P₂.

Both, the healthy reference values HR (including HRi and HRc) and the virtual reference values VR (including VRi and VRc) are grouped in databases according to corresponding clouds of points, for a preferred embodiment.

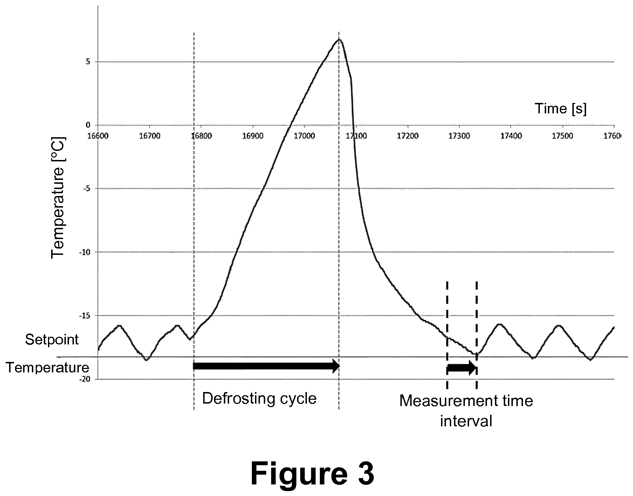

Step 3: Once the training phase is finished, the detection phase or evaluation process starts. Measurements are made after a defrosting process (ensuring no ice is present in the evaporator), just before reaching the setpoint temperature, provided the condenser is not exposed to solar radiation (night time), in order to obtain stable points, which calculation will be detailed further below with reference to Figure 3.

In this phase, each time a stable state is calculated, it will be looked at which of the above mentioned cloud of points belongs (the one registered experimentally of healthy states HR, or those generated virtually VR as corresponding to anomalies), in order to diagnose if the state is healthy or presents some anomaly, by means of the algorithmic Support Vector Machine (SVM). In the case where the algorithm determines that the state is healthy, the database of healthy states is expanded with the new data measured, and the databases of anomalies states are also expanded since Step 2 is performed with the new point measured. In case the measured point is diagnosed as anomalous, the type of anomaly is identified and the operator or installer is notified, or an automatic control of the refrigeration system is performed to correct the identified anomaly.

As an example, if in Step 3 the stable point gives as measurements the variables in Table 6 below, the SVM algorithm classifies it as a healthy point and therefore generates the virtual "ill" points shown in Table 7 below and added to the corresponding databases.

**Table 6. Example of measurement of a healthy state point**

| T_{SH} (°C) | T_{SC} (°C) | T₁₁ (°C) | T₁₄ (°C) | P₁ (bar) | P₂ (bar) |
|---|---|---|---|---|---|
| 9.40 | 5.38 | 25.04 | -18.37 | 0.97 | 14.49 |

**Table 7. Example of generation of virtual "ill" states from the healthy state measurement of step 2**

| | T_{SH} (°C) | T_{SC} (°C) | T₁₁ (°C) | T₁₄ (°C) | P₁ (bar) | P₂ (bar) |
|---|---|---|---|---|---|---|
| HEALTHY | 9.40 | 5.38 | 25.04 | -18.37 | 0.97 | 14.49 |
| ANOMALY 1 | 9.40 | 5.20 | 25.04 | -18.37 | 0.96 | 14.33 |
| ANOMALY 2 | 9.40 | 5.57 | 25.04 | -18.37 | 0.97 | 14.87 |
| ANOMALY 3 | 9.40 | 5.38 | 25.04 | -18.37 | 0.94 | 14.49 |
| ANOMALY 4 | 9.40 | 5.56 | 25.04 | -18.37 | 0.95 | 14.81 |

### Detail of calculation of stable states:

In order to be able to reliably measure the state of the refrigeration system, and due to its periodic nature (compressor turns on and off), the methodology used to measure stable states is shown in Figure 3.

The steady-state measurement must be performed after a defrosting process and at night. The reason for these requirements is to always be able to obtain stable states that can be comparable between them. The refrigeration machine must not have ice in the evaporator (the presence of which could modify the operation of the system), and the condenser does not have to be exposed to solar radiation during the measurement period (solar radiation is a variable and uncontrollable parameter).

After the night defrosting cycle, the temperature of the refrigeration chamber decreases until reaching the setpoint temperature. N measurement points are considered just before (generally a few seconds before) reaching the setpoint temperature as the measuring time interval. With the N points measured arithmetic averages of each of the variables measured are calculated. The reason for carrying out the measurements just before the setpoint temperature is reached is that the longer it goes from the start-up of the compressor the more stable the system behaviour, thus avoiding any uncontrollable fluctuation that may occur in the initial transient start-up process.

The steady-state measurement described above is applied for both the learning mode process and the evaluation process.

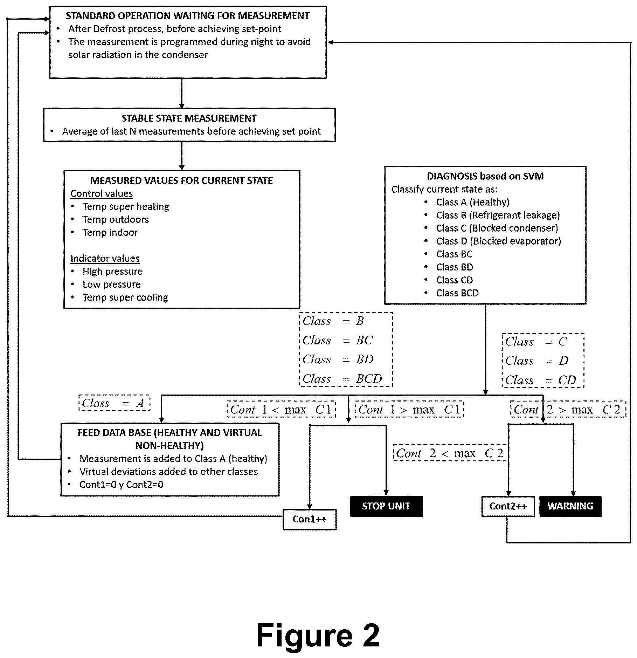

Finally, the flow chart depicted in Figure 2 illustrates an algorithmic implementation of the method of the first aspect of the invention, and is described below.

The flow chart includes an initial stage related to a standard operation at which the algorithm is waiting for measurements, which are programmed to be performed at night and after a defrosting process, as described above.

Then, a stable state measurement stage is implemented, at which N measurements are performed as previously described and arithmetic averages of each of the variables measured are performed, i.e. for those variables, or operating parameters, indicated in the flow chart in the following box, both for the control values of T_{SH}, Tₑₓₜ and T_{cam}, and for the indicator values of T_{SC}, P₁, and P₂.

The so obtained measured values are delivered to the following stage in the flow chart, to perform a diagnosis based on an SVM algorithm, as described previously, which has access to databases including at least the above mentioned healthy points HR (including HRi and HRc) and virtual points VR (including VRi and VRc) as corresponding clouds of points.

The SVM algorithm performs a classification of the current states associated to the measured values in the indicated classes A, B, C, D, and combination of classes BC, BD, CD, and BCD, where class A corresponds to a healthy state, whiles the rest of classes correspond to the anomaly or combination of anomalies indicated in the flowchart.

According to the algorithm schematically shown in Figure 2, when the current state is classified as one of classes C, D or CD, for a number of times above a threshold indicated by "max C2", a warning is activated. Otherwise, if that number of times is below "max C2" then another loop of the algorithm is performed, i.e. a further measurement and corresponding SVM based diagnosis, and a corresponding counter is incremented by 1 (Cont2++).

If, however, the current state is classified as one of classes B, BC, BD and BCD, i.e including an anomaly related to a leak of refrigerant, for a number of times above a threshold indicated by "max C1", the refrigeration system is stopped. Otherwise, if that number of times is below "max C1" then another loop of the algorithm is performed, i.e. a further measurement and corresponding SVM based diagnosis, and a corresponding counter is incremented by 1 (Cont1++).

When the current state is classified as corresponding to Class A, then the measurements associated thereto, i.e. the healthy reference values HR, are fed to the healthy database, and corresponding virtual reference values VR are generated as described above and fed into the respective databases of the virtual reference values VR. Both counters (Cont1 and Cont2) are reset to zero.

A person skilled in the art could introduce changes and modifications in the embodiments described without departing from the scope of the invention as it is defined in the attached claims.

## Claims

1. A computer implemented method for the diagnosis of anomalies in a refrigeration system, wherein said refrigeration system comprises at least a refrigeration chamber, an evaporator (E), a compressor (C) and a condenser (CD), the method comprising:
- a learning mode process comprising performing measurements of several operating parameters of the refrigeration system when operating under known working conditions with no anomalies; and
- an evaluation process comprising performing measurements of at least said operating parameters when the working conditions of the refrigeration system are unknown, and evaluating the values obtained from said measurements;
wherein:
- said learning mode process further comprises defining a plurality of different anomalies in the operation of the refrigeration system, each of said anomalies associated to corresponding one or more specific anomalous variations of one or more of said operating parameters; and
- said evaluation process comprises automatically diagnosing that one of said different anomalies has occurred when the specific one or more anomalous variations associated thereto have been detected;
**characterized in that** said different anomalies include the following anomalies associated to the following indicated anomalous variation of operating parameters:
- Dirtiness in the condenser, associated to an increase in both, the condensing pressure and the degree of subcooling;
- Dirtiness in the evaporator (E), associated to a decrease in the evaporating pressure;
- Dirtiness in the evaporator (E) and in the condenser (CD), associated to an increase in the condensing pressure, to a decrease in the evaporating pressure, and to an increase in the degree of subcooling;
- Leaks of the refrigerant and dirtiness in the condenser (CD), associated to an increase in the condensing pressure, and to a decrease in the degree of subcooling;
- Leaks of the refrigerant and dirtiness in the evaporator (E), associated to a decrease in all of the evaporating pressure, condenser pressure and the degree of subcooling; and
- Leaks of the refrigerant and dirtiness in the evaporator (E) and in the condenser (CD), associated to a decrease in the evaporating pressure, an increase in the condenser pressure, and a decrease in the degree of subcooling.

2. A method according to claim 1, wherein said learning mode process comprises performing said measurements of several operating parameters of the refrigeration system when operating under several and different contour working conditions, with no anomalies, to obtain corresponding groups of different healthy reference values (HR), each group associated to a respective of said contour working conditions.

3. A method according to claim 2, further comprising obtaining by calculation, at said learning mode process, corresponding groups of virtual reference values (VR) by applying specific deviations to at least some of the healthy reference values (HR), each of said specific deviations corresponding to a respective of said anomalous variations.

4. A method according to claim 3, comprising obtaining, by calculation, several sets of said groups of virtual reference values (VR), each set for a respective of said different anomalies, by applying the specific deviations corresponding to the anomalous variations of the corresponding anomaly to at least some of the healthy reference values (HR).

5. A method according to claim 3 or 4, comprising comparing, at the evaluation process, the values obtained from the measurements of the operating parameters with the healthy reference values (HR) and with the virtual reference values (VR), to diagnose if the refrigeration system is whether operating under conditions with no anomalies or working with some of said different anomalies, and in that latter case also to identify which of the different anomalies is occurring, depending on the result of said comparison.

6. A method according to claim 5, comprising using a Support Vector Machine algorithm to classify the healthy reference values (HR) and the virtual reference values (VR) associated to each anomaly into different classes, and to perform said comparison of the evaluation process to determine to which of the classes the currently measured operating parameters values belong.

7. A method according to any of claims 3 to 6, wherein said groups of healthy reference values (HR) include healthy indicator values (HRi) and healthy control values (HRc), wherein said groups of virtual reference values (VR) also include first virtual reference values (VRi) obtained by applying said specific deviations to the healthy indicator values (HRi), and, associated thereto, second virtual reference values (VRc) constituted directly by said healthy control values (HRc), unmodified.

8. A method according to claim 7 when depending on claim 5 or 6, comprising performing said comparison of the evaluation process for all the values of each group, including, regarding the groups of virtual reference values (VR), the first (VRi) and the second (VRc) virtual reference values, and, regarding the groups of healthy reference values (HR), the healthy indicator values (HRi) and the healthy control values (HRc).

9. A method according to any of claims 3 to 8, comprising storing said groups of healthy (HR) and virtual (VR) reference values into respective data structures, and updating said data structures with the corresponding values of the operating parameters measured at the evaluation process.

10. A method according to claim 7 or 8, or to claim 9 when depending on claim 7 or on claim 8, wherein:
- said healthy indicator values (HRi) correspond to the following operating parameters of the refrigeration system: evaporating pressure at the evaporator (E), condensing pressure at the condenser (CD), and degree of subcooling, and
- said healthy control values (HRc) correspond to the following operating parameters of the refrigeration system: temperature of the refrigeration chamber, temperature outside the refrigeration chamber, and degree of superheating.

11. A method according to any of the previous claims, comprising performing said measurements of the operating parameters, both for the learning mode process and for the evaluation process, after a defrosting process, for groups of N measurements within a time interval just before the temperature of the refrigeration chamber arrives at a predetermined set point value, wherein said time interval lasts for seconds or minutes, and wherein each of said obtained values corresponds to an arithmetic average of the N measurements of a corresponding of said groups of N measurements.

12. A method according to claim 11, comprising performing said measurements when the condenser (CD) of the refrigeration system is not exposed to solar radiation.

13. A computer program, comprising program code instructions that when run in a computer or a processor implement the steps of the method of any of the previous claims.

14. An apparatus for the diagnosis of anomalies in a refrigeration system of a refrigeration chamber, comprising:
- a plurality of sensors (St1-St5; Sp1-Sp2) configured and arranged for measuring several operating parameters of the refrigeration system, and providing corresponding electrical signals representative of the measurements; and
- an electronic unit (CU) configured and arranged to receive said measurements, and comprising storage means for storing at least data representative of said measurements and data defining a plurality of different anomalies in the operation of the refrigeration system, and processing means for processing all of said data according to the method of any of claims 1 to 12.

## Patentansprüche

1. Computerimplementiertes Verfahren für die Diagnose von Anomalien in einem Kälteerzeugungssystem, wobei das Kälteerzeugungssystem wenigstens eine Kältekammer, einen Verdampfer (E), einen Verdichter (Z) und einen Verflüssiger (CD) enthält, wobei das Verfahren umfasst:
- einen Lernmodusprozess, der das Ausführen von Messungen mehrerer Betriebsparameter des Kälteerzeugungssystems, wenn es unter bekannten Arbeitsbedingungen ohne Anomalien arbeitet, umfasst; und
- einen Bewertungsprozess, der das Ausführen von Messungen zumindest der Betriebsparameter, wenn die Arbeitsbedingungen des Kälteerzeugungssystems unbekannt sind, und das Bewerten der Werte, die aus den Messungen erhalten werden, umfasst;
wobei:
- der Lernmodusprozess ferner das Definieren mehrerer verschiedener Anomalien im Betrieb des Kälteerzeugungssystems umfasst, wobei jede der Anomalien einer oder mehreren spezifischen anomalen Veränderungen eines oder mehrerer der Betriebsparameter zugeordnet ist; und
- der Bewertungsprozess das automatische Diagnostizieren, dass eine der verschiedenen Anomalien aufgetreten ist, wenn die eine oder die mehreren spezifischen anomalen Veränderungen, die ihr zugeordnet sind, detektiert worden sind, umfasst;
**dadurch gekennzeichnet, dass** die verschiedenen Anomalien die folgenden Anomalien enthalten, die der jeweils folgenden angegebenen anomalen Veränderung von Betriebsparametern zugeordnet sind:
- Schmutz im Verflüssiger, der einer Zunahme sowohl des Verflüssigungsdrucks als auch des Unterkühlungsgrades zugeordnet ist;
- Schmutz im Verdampfer (E), der einer Abnahme des Verdampfungsdrucks zugeordnet ist;
- Schmutz im Verdampfer (E) und im Verflüssiger (CD), der einer Zunahme des Verflüssigungsdrucks, einer Abnahme des Verdampfungsdrucks und einer Zunahme des Unterkühlungsgrades zugeordnet ist;
- Lecks des Kühlmittels und Schmutz im Verflüssiger (CD), die einer Zunahme des Verflüssigungsdrucks und einer Abnahme des Unterkühlungsgrades zugeordnet sind;
- Lecks des Kühlmittels und Schmutz im Verdampfer (E), die einer Abnahme des Verdampfungsdrucks, des Verflüssigerdrucks und des Unterkühlungsgrades zugeordnet sind; und
- Lecks des Kühlmittels und Schmutz im Verdampfer (E) und im Verflüssiger (CD), die einer Abnahme des Verdampfungsdrucks, einer Zunahme des Verflüssigerdrucks und einer Abnahme des Unterkühlungsgrades zugeordnet sind.

2. Verfahren nach Anspruch 1, wobei der Lernmodusprozess das Ausführen der Messungen mehrerer Betriebsparameter des Kälteerzeugungssystems, wenn es unter mehreren und verschiedenen Rahmenarbeitsbedingungen ohne Anomalien arbeitet, umfasst, um entsprechende Gruppen unterschiedlicher gesunder Richtwerte (HR) zu erhalten, wobei jede Gruppe einer Entsprechenden der Rahmenarbeitsbedingungen zugeordnet ist.

3. Verfahren nach Anspruch 2, das ferner umfassend, durch Berechnen in dem Lernprozess, das Erhalten entsprechender Gruppen virtueller Richtwerte (VR) durch Anwenden spezifischer Abweichungen auf wenigstens einige der gesunden Richtwerte (HR), wobei jede der spezifischen Abweichungen einer Entsprechenden der anomalen Veränderungen entspricht.

4. Verfahren nach Anspruch 3, umfassend, durch Berechnen, das Erhalten mehrerer Sätze der Gruppen virtueller Richtwerte (VR), wobei jeder Satz einer Entsprechenden der verschiedenen Anomalien entspricht, durch Anwenden der spezifischen Abweichungen, die den anomalen Veränderungen der entsprechenden Anomalie entsprechen, auf wenigstens einige der gesunden Richtwerte (HR).

5. Verfahren nach Anspruch 3 oder 4, umfassend in dem Bewertungsprozess das Vergleichen der Werte, die aus den Messungen der Betriebsparameter erhalten werden, mit den gesunden Richtwerten (HR) und mit den virtuellen Richtwerten (VR), um zu diagnostizieren, ob das Kälteerzeugungssystem entweder unter Bedingungen ohne Anomalien arbeitet oder mit einigen der verschiedenen Anomalien arbeitet, und im letzteren Fall auch um zu identifizieren, welche der verschiedenen Anomalien auftreten, in Abhängigkeit vom Ergebnis des Vergleichs.

6. Verfahren nach Anspruch 5, umfassend das Verwenden eines Unterstützungs-Vektormaschinen-Algorithmus, um die gesunden Richtwerte (HR) und die virtuellen Richtwerte (VR), die jeder Anomalie zugeordnet sind, in unterschiedliche Klassen zu klassifizieren und den Vergleich des Bewertungsprozesses auszuführen, um zu bestimmen, zu welcher der Klassen die aktuell gemessenen Betriebsparameter gehören.

7. Verfahren nach einem der Ansprüche 3 bis 6, wobei die Gruppen von gesunden Richtwerten (HR) gesunde Indikatorwerte (HRi) und gesunde Regelwerte (HRc) enthalten, wobei die Gruppen der virtuellen Richtwerte (VR) außerdem erste virtuelle Richtwerte (VRi), die durch Anwenden der spezifischen Abweichungen auf die gesunden Indikatorwerte (HRi) erhalten werden, und, damit verbunden, zweite virtuelle Richtwerte (VRc), die direkt durch die gesunden Regelwerte (HRc) nicht modifiziert gebildet sind, enthalten.

8. Verfahren nach Anspruch 7, wenn abhängig von Anspruch 5 oder 6, umfassend das Ausführen des Vergleichs des Bewertungsprozesses für alle Werte jeder Gruppe, einschließlich bezüglich der Gruppen von virtuellen Richtwerten (VR), der ersten (VRi) und zweiten (VRc) virtuellen Richtwerte und bezüglich der Gruppen von gesunden Richtwerten (HR) der gesunden Indikatorwerte (HRi) und der gesunden Regelwerte (HRc).

9. Verfahren nach einem der Ansprüche 3 bis 8, umfassend das Speichern der Gruppen von gesunden Richtwerten (HR) und virtuellen Richtwerten (VR) in jeweiligen Datenstrukturen und das Aktualisieren der Datenstrukturen mit den entsprechenden Werten der Betriebsparameter, die in dem Bewertungsprozess gemessen werden.

10. Verfahren nach Anspruch 7 oder 8 oder nach Anspruch 9, wenn abhängig von Anspruch 7 oder 8, wobei:
- die gesunden Indikatorwerte (HRi) den folgenden Betriebsparametern des Kälteerzeugungssystems entsprechen: Verdampfungsdruck beim Verdampfer (E), Verflüssigungsdruck beim Verflüssiger (CD) und Unterkühlungsgrad, und
- die gesunden Regelwerte (HRc) den folgenden Betriebsparametern des Kälteerzeugungssystems entsprechen: Temperatur der Kältekammer, Temperatur außerhalb der Kältekammer und Überhitzungsgrad.

11. Verfahren nach einem der vorhergehenden Ansprüche, umfassend das Ausführen der Messungen der Betriebsparameter sowohl für den Lernmodusprozess als auch für den Bewertungsprozess nach einem Enteisungsprozess für Gruppen von N Messungen innerhalb eines Zeitintervalls direkt bevor die Temperatur der Kältekammer einen vorgegebenen Einstellpunktwert erreicht, umfasst, wobei das Zeitintervall Sekunden oder Minuten dauert und wobei jeder der erhaltenen Werte einem arithmetischen Mittel der N Messungen einer Entsprechenden der Gruppen von N Messungen entspricht.

12. Verfahren nach Anspruch 11, das das Ausführen der Messungen, wenn der Verflüssiger (CD) des Kälteerzeugungssystems keiner Sonnenstrahlung ausgesetzt ist, umfasst.

13. Computerprogramm, das Programmcodebefehle enthält, die dann, wenn sie in einem Computer oder einem Prozessor ablaufen, die Schritte des Verfahrens nach einem der vorhergehenden Ansprüche implementieren.

14. Vorrichtung für die Diagnose von Anomalien in einem Kälteerzeugungssystem einer Kältekammer, umfassend:
- mehrere Sensoren (St1-St5; Sp1-Sp2), die konfiguriert und ausgelegt sind, mehrere Betriebsparameter des Kälteerzeugungssystems zu messen und entsprechende elektrische Signale, die für die Messungen repräsentativ sind, bereitzustellen; und
eine elektronische Einheit (CU), die konfiguriert und ausgelegt ist, die Messungen zu empfangen, und Speichermittel zum Speichern zumindest von Daten, die für die Messungen repräsentativ sind, und von Daten, die mehrere verschiedene Anomalien im Betrieb des Kälteerzeugungssystems definieren, und Verarbeitungsmittel zum Verarbeiten sämtlicher Daten gemäß den Verfahren nach einem der Ansprüche 1 bis 12 umfasst.

## Revendications

1. Procédé mis en œuvre par ordinateur pour le diagnostic d'anomalies dans un système de réfrigération, dans lequel ledit système de réfrigération comprend au moins une chambre de réfrigération, un évaporateur (E), un compresseur (C) et un condenseur (CD), le procédé comprenant :
- un processus de mode d'apprentissage consistant à mettre en œuvre des mesures de plusieurs paramètres de fonctionnement du système de réfrigération lorsqu'il fonctionne dans des conditions de travail connues sans anomalies ; et
- un processus d'évaluation consistant à mettre en œuvre des mesures d'au moins lesdits paramètres de fonctionnement lorsque les conditions de travail du système de réfrigération sont inconnues, et à évaluer les valeurs obtenues à partir desdites mesures ;
dans lequel :
- ledit processus de mode d'apprentissage consiste en outre à définir une pluralité d'anomalies différentes dans le fonctionnement du système de réfrigération, chacune desdites anomalies étant associée à une ou plusieurs variations anormales spécifiques correspondantes d'un ou plusieurs desdits paramètres de fonctionnement ; et
- ledit processus d'évaluation consiste à diagnostiquer automatiquement que l'une desdites différentes anomalies s'est produite lorsque ladite ou lesdites variations anormales spécifiques associées à celles-ci ont été détectées ;
**caractérisé en ce que** lesdites différentes anomalies incluent les anomalies suivantes associées à la variation anormale indiquée suivante de paramètres de fonctionnement :
- de la saleté dans le condenseur, associée à une augmentation à la fois de la pression de condensation et du degré de sous-refroidissement ;
- de la saleté dans l'évaporateur (E), associée à une diminution de la pression d'évaporation ;
- de la saleté dans l'évaporateur (E) et dans le condenseur (CD), associée à une augmentation de la pression de condensation, à une diminution de la pression d'évaporation et à une augmentation du degré de sous-refroidissement ;
- des fuites du réfrigérant et de la saleté dans le condenseur (CD), associées à une augmentation de la pression de condensation et à une diminution du degré de sous-refroidissement ;
- des fuites du réfrigérant et de la saleté dans l'évaporateur (E), associées à une diminution à la fois de la pression d'évaporation, de la pression de condensation et du degré de sous-refroidissement ; et
- des fuites du réfrigérant et de la saleté dans l'évaporateur (E) et dans le condenseur (CD), associées à une diminution de la pression d'évaporation, à une augmentation de la pression de condensation et à une diminution du degré de sous-refroidissement.

2. Procédé selon la revendication 1, dans lequel ledit processus de mode d'apprentissage consiste à mettre en œuvre lesdites mesures de plusieurs paramètres de fonctionnement du système de réfrigération lorsqu'il fonctionne dans plusieurs conditions de travail de contour différentes, sans anomalies, pour obtenir des groupes correspondants de différentes valeurs de référence saines (HR), chaque groupe étant associé à une condition respective desdites conditions de travail de contour.

3. Procédé selon la revendication 2, comprenant en outre l'étape consistant à obtenir, par le biais d'un calcul, dans le cadre dudit processus de mode d'apprentissage, des groupes correspondants de valeurs de référence virtuelles (VR), en appliquant des écarts spécifiques à au moins certaines des valeurs de référence saines (HR), chacun desdits écarts spécifiques correspondant à une variation respective desdites variations anormales.

4. Procédé selon la revendication 3, comprenant l'étape consistant à obtenir, par le biais d'un calcul, plusieurs ensembles desdits groupes de valeurs de référence virtuelles (VR), chaque ensemble étant destiné à une anomalie respective desdites différentes anomalies, en appliquant les écarts spécifiques correspondant aux variations anormales de l'anomalie correspondante à au moins certaines des valeurs de référence saines (HR).

5. Procédé selon la revendication 3 ou 4, comprenant l'étape consistant à comparer, dans le cadre du processus d'évaluation, les valeurs obtenues à partir des mesures des paramètres de fonctionnement, aux valeurs de référence saines (HR) et aux valeurs de référence virtuelles (VR), pour diagnostiquer si le système de réfrigération fonctionne dans des conditions sans anomalies, ou s'il fonctionne avec certaines desdites différentes anomalies, et dans ce dernier cas, également en vue d'identifier laquelle des différentes anomalies se produit, en fonction du résultat de ladite comparaison.

6. Procédé selon la revendication 5, comprenant l'étape consistant à utiliser un algorithme de machine à vecteurs de support pour classer les valeurs de référence saines (HR) et les valeurs de référence virtuelles (VR) associées à chaque anomalie, dans différentes classes, et pour mettre en œuvre ladite comparaison du processus d'évaluation afin de déterminer à quelle classe appartiennent les valeurs de paramètres de fonctionnement actuellement mesurées.

7. Procédé selon l'une quelconque des revendications 3 à 6, dans lequel lesdits groupes de valeurs de référence saines (HR) incluent des valeurs d'indicateur saines (HRi) et des valeurs de régulation saines (HRc), dans lequel lesdits groupes de valeurs de référence virtuelles (VR) incluent également des premières valeurs de référence virtuelles (VRi) obtenues en appliquant lesdits écarts spécifiques aux valeurs d'indicateur saines (HRi), et, associées à celles-ci, des secondes valeurs de référence virtuelles (VRc) constituées directement par lesdites valeurs de régulation saines (HRc) non modifiées.

8. Procédé selon la revendication 7, lorsqu'elle dépend de la revendication 5 ou 6, comprenant l'étape consistant à mettre en œuvre ladite comparaison du processus d'évaluation pour toutes les valeurs de chaque groupe, y compris, en ce qui concerne les groupes de valeurs de référence virtuelles (VR), les premières (VRi) et secondes (VRc) valeurs de référence virtuelles, et, en ce qui concerne les groupes de valeurs de référence saines (HR), les valeurs d'indicateur saines (HRi) et les valeurs de régulation saines (HRc).

9. Procédé selon l'une quelconque des revendications 3 à 8, comprenant l'étape consistant à stocker lesdits groupes de valeurs de référence saines (HR) et valeurs de référence virtuelles (VR) dans des structures de données respectives, et à mettre à jour lesdites structures de données avec les valeurs correspondantes des paramètres de fonctionnement mesurées dans le cadre du processus d'évaluation.

10. Procédé selon la revendication 7 ou 8, ou selon la revendication 9 lorsqu'elle dépend de la revendication 7 ou 8, dans lequel :
- lesdites valeurs d'indicateur saines (HRi) correspondent aux paramètres de fonctionnement suivants du système de réfrigération, à savoir : la pression d'évaporation au niveau de l'évaporateur (E), la pression de condensation au niveau du condenseur (CD) et le degré de sous-refroidissement ; et
- lesdites valeurs de régulation saines (HRc) correspondent aux paramètres suivants de fonctionnement du système de réfrigération, à savoir : la température de la chambre de réfrigération, la température à l'extérieur de la chambre de réfrigération, et le degré de surchauffe.

11. Procédé selon l'une quelconque des revendications précédentes, comprenant l'étape consistant à mettre en œuvre lesdites mesures des paramètres de fonctionnement, à la fois pour le processus de mode d'apprentissage et pour le processus d'évaluation, après un processus de dégivrage, pour des groupes de N mesures dans un intervalle de temps juste avant que la température de la chambre de réfrigération n'arrive à une valeur de point de consigne prédéterminée, dans lequel ledit intervalle de temps dure quelques secondes ou quelques minutes, et dans lequel chacune desdites valeurs obtenues correspond à une moyenne arithmétique des N mesures d'un groupe correspondant desdits groupes de N mesures.

12. Procédé selon la revendication 11, comprenant l'étape consistant à mettre en œuvre lesdites mesures lorsque le condenseur (CD) du système de réfrigération n'est pas exposé au rayonnement solaire.

13. Programme informatique, comprenant des instructions de code de programme qui, lorsqu'elles sont exécutées dans un ordinateur ou un processeur, mettent en œuvre les étapes du procédé selon l'une quelconque des revendications précédentes.

14. Appareil pour le diagnostic d'anomalies dans un système de réfrigération d'une chambre de réfrigération, comprenant :
- une pluralité de capteurs (St1-St5 ; Sp1-Sp2) configurés et agencés de manière à mesurer plusieurs paramètres de fonctionnement du système de réfrigération, et à fournir des signaux électriques correspondants représentatifs des mesures ; et
- une unité électronique (CU) configurée et agencée de manière à recevoir lesdites mesures, et comprenant un moyen de stockage pour stocker au moins des données représentatives desdites mesures et des données définissant une pluralité d'anomalies différentes dans le fonctionnement du système de réfrigération, et un moyen de traitement pour traiter la totalité desdites données conformément au procédé selon l'une quelconque des revendications 1 à 12.
